# EUROPÄISCHE PATENTSCHRIFT

(11) **EP 3 013 645 B1**
(45) Veröffentlichungstag und Bekanntmachung des Hinweises auf die Patenterteilung: **12.07.2017**
(21) Anmeldenummer: 14730737.5
(22) Anmeldetag: 27.05.2014
(51) Int. Cl.: B60R 1/00

(54) **SPIEGELERSATZVORRICHTUNG UND FAHRZEUG**
MIRROR REPLACEMENT DEVICE AND VEHICLE
DISPOSITIF DE REMPLACEMENT DE RÉTROVISEUR ET VÉHICULE

(30) Priorität: 26.06.2013 DE 102013106701
(43) Veröffentlichungstag der Anmeldung: 04.05.2016
(73) Patentinhaber: Conti Temic Microelectronic GmbH, 90411 Nürnberg (DE)
(72) Erfinder: BRANDL, Jürgen, 92521 Schwarzenfeld (DE); FEY, Wolfgang, 88131 Bodolz (DE)
(86) Internationale Anmeldenummer: PCT/DE2014/200234
(87) Internationale Veröffentlichungsnummer: WO 2014/206406

(56) Entgegenhaltungen:
- EP-A1- 2 431 227
- EP-A2- 1 158 473
- DE-A1-102007 032 527
- DE-A1-102011 077 143
- US-A1- 2009 102 921

## Beschreibung

Die vorliegende Erfindung bezieht sich auf eine Spiegelersatzvorrichtung und ein entsprechendes Fahrzeug.

### Stand der Technik

In Fahrzeugen wird dem Fahrer des jeweiligen Fahrzeugs heutzutage ein rückwärtiges Bild der Fahrzeugumgebung gezeigt, so dass dieser sein Fahrverhalten an die Fahrzeugumgebung anpassen kann.

Insbesondere wird dem Fahrer ein Bild der seitlichen und/oder rückwärtigen Fahrzeugumgebung, als relevanter und durch den Fahrer zu beobachtender Sichtbereich, im Fahrzeug mit Hilfe von Spiegeln dargestellt. Dazu werden üblicherweise die bekannten Seiten- und Rückspiegeln bzw. Außen- und Innenspiegel genutzt.

Dabei lassen sich die Spiegel häufig manuell und/oder elektromechanisch verstellen. Durch verschiedene Krümmungen der Spiegeloberfläche lassen sich zudem Vergrößerungen, Verkleinerungen oder spezielle Bildausschnitte für den Fahrer darstellen, z.B. zur Erfassung sogenannter toter Winkel.

Bei üblichen Spiegeln kann eine starke Lichtquelle hinter dem Fahrzeug, z.B. die tief stehende Sonne oder ein herannahendes Fahrzeug mit schlecht eingestellten Scheinwerfern, den Fahrer über den Spiegel blenden.

Um dies zu vermeiden, ist es bekannt, dass sich die Spiegel in ihrer Blendwirkung verstellen lassen. Beispielsweise kann ein Spiegel mit einer LCD-Schicht versehen sein, welche die Spiegeloberfläche abdunkelt, damit der Fahrer nicht über die Spiegel geblendet wird.

Ferner ist es bekannt, bei speziellen Fahrzeugen, z.B. bei Nutzfahrzeugen bzw. LKW, mehrere Spiegel einzusetzen, um einen entsprechenden Sichtbereich abzudecken, der dem Fahrer des jeweiligen Fahrzeugs eine Beobachtung der relevanten Fahrzeugumgebung ermöglicht.

Bei heute üblichen Spiegelanordnungen für Fahrzeuge sind die Einstellmöglichkeiten begrenzt und eine für den Fahrer optimale Darstellung der Fahrzeugumgebung ist nicht in jeder Fahrsituation möglich.

Die US 2009 / 102 921 A1, die EP 2 431 227 A1 und die DE 10 2011 077 143 A1 zeigen sogenannte Top-View-Systeme, bei welchen das Fahrzeug in einem Monitor in einer Aufsicht dargestellt wird.

Die EP 1 158 473 A2 zeigt ein System bei welchem auf einer Anzeige in einem Fahrzeug eine Rundumsicht aus der Perspektive des Fahrzeugs dargestellt werden kann.

Die DE 10 2007 032 527 A1 zeigt ein System, bei welchem das Bild einer Kamera auf einen Monitor in der A-Säule eines Fahrzeugs übertragen wird.

### Offenbarung der Erfindung

Es ist daher eine Aufgabe der vorliegenden Erfindung eine verbesserte Sicht des Fahrers eines Fahrzeugs auf die Fahrzeugumgebung zu ermöglichen.

Demgemäß offenbart die vorliegende Erfindung eine Spiegelersatzvorrichtung mit den Merkmalen des Patentanspruchs 1 und ein Fahrzeug mit den Merkmalen des Patenanspruchs 15.

Demgemäß ist vorgesehen:
Eine Spiegelersatzvorrichtung für ein Fahrzeug mit den Merkmalen des Patentanspruchs 1.

Ferner ist vorgesehen:
Ein Fahrzeug mit einer erfindungsgemäßen Spiegelersatzvorrichtung.

### Vorteile der Erfindung

Die der vorliegenden Erfindung zu Grunde liegende Erkenntnis besteht darin, dass eine mechanische Spiegelanordnung wenig flexibel ist.

Die der vorliegenden Erfindung zu Grunde liegende Idee besteht nun darin, dieser Erkenntnis Rechnung zu tragen und eine Vorrichtung vorzusehen, die einen solchen mechanischen Spiegel ersetzt und durch ein flexibles elektronisches System ersetzt.

Dazu offenbart die vorliegende Erfindung eine Spiegelersatzvorrichtung, die mit Hilfe mindestens einer Kamera die Umgebung eines Fahrzeugs erfasst und ein Bildsignal, welches diese erfasste Umgebung, aufweist, nach einer Verarbeitung durch eine Bildverarbeitungseinrichtung ausgibt und auf einer Anzeigeeinrichtung darstellt.

Damit ermöglicht die vorliegende Erfindung eine sehr flexible Gestaltung der Spiegelersatzvorrichtung, da sowohl die Kameras als auch die Anzeigeeinrichtung sehr flexibel in bzw. an dem Fahrzeug angeordnet werden können.

Ferner kann die Bildverarbeitungseinrichtung in die Kamera oder die Anzeigeeinrichtung integriert werden. Die Bildverarbeitungseinrichtung kann aber z.B. auch in ein bereits in dem Fahrzeug vorhandenes Steuergerät integriert werden.

Schließlich ermöglicht es die Bildverarbeitungseinrichtung unterschiedliche Bearbeitungsschritte auf das Bildsignal anzuwenden und die Darstellung der Umgebung des Fahrzeugs so an unterschiedliche Anforderungen anzupassen.

Vorteilhafte Ausführungsformen und Weiterbildungen ergeben sich aus den Unteransprüchen sowie aus der Beschreibung unter Bezugnahme auf die Figuren.

In einer Ausführungsform ist die mindestens eine Kamera ausgebildet, zumindest den seitlichen und/oder rückwärtigen Umgebungsbereich des Fahrzeugs zu erfassen. Dies ermöglicht es, mit Hilfe der erfindungsgemäßen Spiegelersatzvorrichtung die heute in Fahrzeugen üblichen Seiten- und Rückspiegel zu ersetzten, durch die der Fahrer den seitlichen und rückwärtigen Umgebungsbereich des Fahrzeugs beobachten kann.

In einer Ausführungsform weist die Spiegelersatzvorrichtung eine Vielzahl von Kameras auf, welche derart ausgebildet sind, dass von den jeweiligen Kameras erfasste Kamerabildsignale sich ergänzen und das Bildsignal bilden. Dadurch wird es möglich ein zusammenhängendes Bild der Umgebung auch dann zu erfassen und zu erstellen, wenn dies z.B. aus geometrischen Gründen mit einer Kamera nicht möglich ist. Schließlich kann aus diesem zusammengesetzten Bild dann ein entsprechender Bildausschnitt ausgewählt werde kann.

In einer Ausführungsform weist die Bildverarbeitungseinrichtung eine Kommunikationsschnittstelle auf, welche dazu ausgebildet ist, von einem Fahrzeugsystem des Fahrzeugs zumindest Daten über die Fahrtrichtung des Fahrzeugs und die Fahrzeuggeschwindigkeit zu erhalten. Dies ermöglicht es, in der Bildverarbeitungseinrichtung bestimmte Trigger bzw. Auslöser zu definieren, die basierend auf den von dem Fahrzeugsystem erhaltenen werten eine Bildverarbeitung in der Bildverarbeitungseinrichtung starten bzw. beenden oder einen Wechsel zwischen zwei Arten von Bildverarbeitungen auslösen.

In einer Ausführungsform weist die Bildverarbeitungseinrichtung eine Auswahleinrichtung auf, welche dazu ausgebildet ist, aus dem Bildsignal einen Bildausschnitt auszuwählen und den ausgewählten Bildausschnitt als das verarbeitete Bildsignal auszugeben. Dies ermöglicht es, für den Fahrer relevante Bildausschnitte aus dem Bildsignal auszuwählen und diesem z.B. in Abhängigkeit von der jeweiligen Fahrsituation anzuzeigen.

In einer Ausführungsform ist die Auswahleinrichtung dazu ausgebildet, bei einer Vorwärtsfahrt des Fahrzeugs einen Bildausschnitt auszuwählen, welcher in etwa dem theoretisch durch einen Rückspiegel und/oder Seitenspiegel in dem Fahrzeug dargestellten Bildausschnitt entspricht. Dies ermöglicht einen einfachen Ersatz von herkömmlichen Rückspiegels bzw. Seitenspiegeln eines Fahrzeugs.

In einer Ausführungsform ist die mindestens eine Kamera ausgebildet, den toten Winkel des Fahrzeugs zu erfassen. Zusätzlich ist die Auswahleinrichtung dazu ausgebildet, den Bildausschnitt auszuwählen, welcher dem toten Winkel des Fahrzeugs entspricht. Dadurch kann dem Fahrer auch eine Sicht auf einen Teil der Umgebung des Fahrzeugs ermöglicht werden, den ein normaler Spiegel nicht darstellt. Ferner kann dem Fahrer dieser Bereich auf der Anzeigeeinrichtung angezeigt werden, wo dieser ihn je nach Lage der Anzeigeeinrichtung besser wahrnimmt, als dies bei einem entsprechenden Seitenspiegel der Fall wäre.

In einer Ausführungsform ist die Auswahleinrichtung dazu ausgebildet, bei einer Rückwärtsfahrt des Fahrzeugs mit einer Geschwindigkeit, die unter einem ersten Geschwindigkeitsschwellwert liegt, einen Bildausschnitt auszuwählen und/oder zu markieren, der den Boden und/oder den Bordstein in der Umgebung des Fahrzeugs zeigt. Dies erleichtert dem Fahrer des Fahrzeugs das Rangieren und Einparken im Rückwärtsgang.

In einer Ausführungsform ist die Auswahleinrichtung dazu ausgebildet, bei einer Beladung des Fahrzeugs und/oder einer Kurvenfahrt des Fahrzeugs und/oder einer Fahrt einer Steigung oder eines Gefälles durch das Fahrzeug einen Bildausschnitt auszuwählen, der die Straße hinter dem Fahrzeug zeigt. Dadurch wird es für den Fahrer möglich, ohne ein ständiges Nachjustieren z.B. eines herkömmlichen Spiegels, die Straße hinter dem Fahrzeug auch dann zu beobachten, wenn der Blickwinkel auf die Straße sich verändert.

In einer Ausführungsform ist die Auswahleinrichtung ausgebildet, mehr als einen Bildausschnitt auszuwählen und die ausgewählten Bildausschnitte in dem verarbeiteten Bildsignal zu kombinieren. Dadurch wird es z.B. möglich, einen Bildausschnitt anzuzeigen, der die Umgebung hinter dem Fahrzeug zeigt und einen Bildausschnitt, der den toten Winkel des Fahrzeugs zeigt. Die Bildausschnitte können dabei einfach nebeneinander gesetzt angezeigt werden. Alternativ können die Übergänge zwischen den Bildausschnitten z.B. durch eine Verzerrung des Bildes dargestellt werden. Dadurch wird ein übergangsloses Zusammenfügen der ausgewählten Bildausschnitte möglich.

In einer Ausführungsform weist die Bildverarbeitungseinrichtung eine Bildbearbeitungseinrichtung auf, welche ausgebildet ist die Helligkeit mindestens eines Ausschnitts des Bildsignals zu verändern, insbesondere zu normalisieren.

In einer Ausführungsform weist die Bildverarbeitungseinrichtung eine Bildbearbeitungseinrichtung auf, welche ausgebildet ist den Kontrast mindestens eines Ausschnitts des Bildsignals zu verändern, insbesondere zu erhöhen.

In einer Ausführungsform weist die Bildverarbeitungseinrichtung eine Bildbearbeitungseinrichtung auf, welche ausgebildet ist die Farbgebung mindestens eines Ausschnitts des Bildsignals zu verändern.

Durch eine Änderung der Helligkeit, des Kontrasts oder der Farbgebung von Ausschnitten des Bildsignals können für den Fahrer des Fahrzeugs relevante Ausschnitte hervorgehoben werden. Dies ermöglicht ein besseres Erkennen solcher relevanter Ausschnitte durch den Fahrer. Beispielsweise kann nachts das Bild derart eingefärbt werden, dass Objekte für den Fahrer besser erkennbar sind. Ferner kann z.B. die Helligkeit sehr heller Objekte oder Lichtquellen reduziert werden, so dass der Rest des Bildausschnitts besser erkennbar ist.

In einer Ausführungsform weist die Bildverarbeitungseinrichtung eine Bildbearbeitungseinrichtung auf, welche ausgebildet ist den Inhalt des Bildsignals zu stabilisieren. Dadurch kann auch bei einer sehr unruhigen Fahrt ein ruhiges Bild angezeigt werden, wodurch der dargestellte Bildausschnitt besser erkennbar ist.

In einer Ausführungsform weist die Bildverarbeitungseinrichtung eine Objekterkennungseinrichtung auf, welche ausgebildet ist, Objekte in dem Bildsignal zu erkennen und mindestens ein erkanntes Objekt in dem Bildsignal zu markieren.

In einer Ausführungsform ist die Objekterkennungseinrichtung ausgebildet ein Objekt durch Umranden und/oder Einfärben mit einer vorgegebenen Farbe und/oder Zoomen auf das Objekt zu markieren.

Dies ermöglicht es, die Aufmerksamkeit des Fahrers gezielt auf Objekte zu richten. Beispielsweise kann ein Objekt, z.B. ein anderes Fahrzeug, hervorgehoben bzw. markiert werden, welchem sich der Fahrer nähert, bevor es zu einem Zusammenstoß der Fahrzeuge kommt.

In einer Ausführungsform weist die Bildverarbeitungseinrichtung eine Recheneinrichtung auf, welche ausgebildet ist, ein Warnsignal basierend auf dem Bildsignal zu erzeugen, wenn ein Verlassen der Fahrspur durch das Fahrzeug bevorsteht und/oder wenn sich ein Objekt in einem toten Winkel des Fahrzeugs befindet und/oder von hinten dem Fahrzeug nähert. Dadurch kann die Spiegelersatzvorrichtung zusätzliche Funktionalitäten in dem Fahrzeug bereitstellen. Beispielsweise kann die Spiegelersatzvorrichtung als Spurwechselassistent oder Spurverlassenswarnung oder dergleichen eingesetzt werden.

In einer Ausführungsform weist die Bildverarbeitungseinrichtung eine Speichereinrichtung auf, welche ausgebildet ist, das Bildsignal zu speichern. Dies ermöglicht es, z.B. nach einem Unfall das Geschehen zu rekonstruieren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesse-rungen oder Ergänzungen zu der jeweiligen Grundform der vorliegenden Erfindung hinzufügen.

### Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Spiegelersatzvorrichtung;
- Fig. 2: ein Blockschaltbild einer Ausführungsform eines erfindungsgemäßen Fahrzeugs; und
- Fig. 3: ein Blockschaltbild einer weiteren Ausführungsform einer erfindungsgemäßen Spiegelersatzvorrichtung.

In allen Figuren sind gleiche bzw. funktionsgleiche Elemente und Vorrichtungen - sofern nichts Anderes angegeben ist - mit denselben Bezugszeichen versehen worden.

### Ausführungsformen der Erfindung

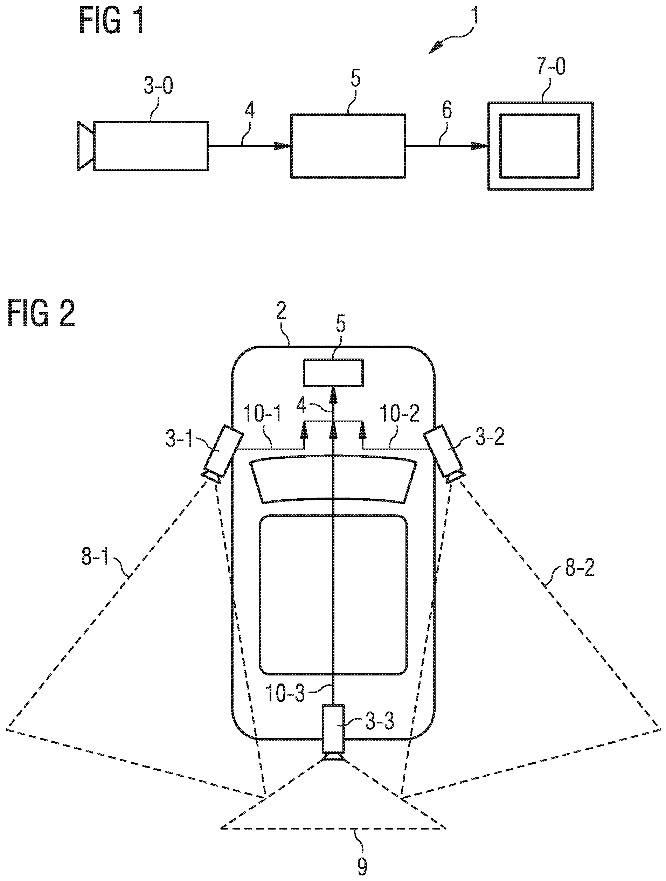

Fig. 1 zeigt ein Blockschaltbild einer Ausführungsform einer erfindungsgemäßen Spiegelersatzvorrichtung 1.

Die Spiegelersatzvorrichtung 1 der Fig. 1 weist eine Kamera 3-0 auf, die z.B. an einem Fahrzeug 2 angeordnet sein kann. Die Kamera liefert ein Bildsignal 4, welches an eine Bildverarbeitungseinrichtung 5 übertragen wird.

Die Bildverarbeitungseinrichtung 5 verarbeitet das Bild mit Hilfe unterschiedlicher Bildverarbeitungsfunktionen und gibt ein verarbeitetes Bildsignal 6 aus, welches auf einer Anzeigeeinrichtung 7-0 angezeigt wird. In Fig. 1 ist lediglich eine einzige Anzeigeeinrichtung 7-0 dargestellt. In weiteren Ausführungsformen können weitere Anzeigeeinrichtungen 7-1 - 7-3 vorhanden sein.

Die Anzeigeeinrichtung 7-0 kann jede beliebige Art von Anzeige sein. Beispielsweise kann die Anzeigeeinrichtung 7-0 als ein LCD-Bildschirm, ein OLED-Bildschirm oder dergleichen ausgebildet sein. Dabei kann das verarbeitete Bildsignal 6 analog oder digital an die Anzeigeeinrichtung 7-0 übertragen werden. In einer Ausführungsform kann das verarbeitete Bildsignal 6 auch kabellos an die Anzeigeeinrichtung 7-0 übertragen werden.

Als Kamera 3-0 kann in der erfindungsgemäßen Spiegelersatzvorrichtung 1 jede Art von Sensor genutzt werden, der in der Lage ist, Bilder der Umgebung des Fahrzeugs 2 zu erfassen. Die Kamera 3-0 kann z.B. als digitale CCD-Kamera oder dergleichen ausgebildet sein. Die Spiegelersatzvorrichtung 1 der Fig. 1 weist lediglich eine einzige Kamera 3-0 auf. In weiteren Ausführungsformen sind weiter Kameras 3-0 - 3-3 möglich.

Die Bildverarbeitungseinrichtung 5 kann eine programmgesteuerte Einrichtung 5 z.B. ein Mikrocontroller 5 oder dergleichen sein. Die Bildverarbeitungseinrichtung 5 kann auch Programmodule aufweisen, die die im Folgenden beschriebenen Funktionalitäten in der jeweiligen programmgesteuerten Einrichtung 5 umsetzen.

In einer Ausführungsform kann die Bildverarbeitungseinrichtung 5 in die Kamera 3-0 oder eine der Kameras 3-0 - 3-3 integriert sein. Alternativ kann die Bildverarbeitungseinrichtung 5 auch in die Anzeigeeinrichtung 7-0 oder eine der weiteren Anzeigeeinrichtungen 7-1 - 7-3 integriert sein.

In einer weiteren Ausführungsform kann die Bildverarbeitungseinrichtung 5 als Bestandteile eines Bereits in dem Fahrzeug 2 vorhandenen Fahrzeugsystems 12 ausgebildet sein. In solch einer Ausführungsform kann die Bildverarbeitungseinrichtung 5 z.B. als Programmodul in einem Fahrzeugsystem 12 ausgebildet sein, welches zusätzlich weitere Funktionen aufweist. Dieses Fahrzeugsystem 12 kann in einer Ausführungsform z.B. ein multitaskingfähiges Betriebssystem, insbesondere ein AUTOSAR kompatibles Betriebssystem aufweisen.

Fig. 2 zeigt ein Blockschaltbild einer Ausführungsform eines erfindungsgemäßen Fahrzeugs 2.

Das Fahrzeug 2 weist drei Kameras 3-1 - 3-3 auf. Dabei ist eine Kamera 3-1 an derjenigen Position angebracht, an welcher üblicherweise an einem Fahrzeug 2 der linke Seitenspiegel angebracht ist. Die Kamera 3-2 ist an derjenigen Position angebracht, an welcher üblicherweise an einem Fahrzeug 2 der rechte Seitenspiegel angebracht ist. Die erste Kamera 3-1 erfasst folglich den linken seitlichen Umgebungsbereich 8-1 des Fahrzeugs 2 und die zweite Kamera 3-2 erfasst den rechten seitlichen Umgebungsbereich 8-2 des Fahrzeugs 2.

Schließlich ist die dritte Kamera 3-3 am Heck des Fahrzeugs derart angebracht, das diese den Bereich hinter dem Fahrzeug 2, also den rückwärtigen Umgebungsbereich 9 des Fahrzeugs 2, erfassen kann. Beispielsweise kann die dritte Kamera 3-3 an dem Kofferraumdeckel des Fahrzeugs 2 oder hinter der Rückscheibe des Fahrzeugs 2 angeordnet werden.

In Fig. 2 wird deutlich, wie die einzelnen Kameras 3-1 - 3-3 jeweils unterschiedliche aber sich ergänzende Bildbereiche erfassen und folglich jeweils unterschiedliche Kamerabildsignale 10-1 - 10-3 liefern, die zusammengefasst das Bildsignal 4 ergeben. In einer Ausführungsform kann für das Zusammenfassen eine Vorrichtung vorgesehen sein oder die Bildverarbeitungseinrichtung 5 entsprechend ausgebildet sein, so das die einzelnen unterschiedliche Kamerabildsignale 10-1 - 10-3 so zusammengefasst werden, dass ein Bildsignal 4 entsteht, welches eine nahtlose Abbildung der erfassten Fahrzeugumgebung aufweist.

In Fig. 2 wird auch deutlich, dass die einzelnen Kameras 3-1 - 3-3 unterschiedlich ausgebildet sein können bzw. mit Hilfe unterschiedlicher optischer Filter bzw. Linsen derart eingestellt werden können, dass diese z.B. unterschiedlich breite Bildbereiche erfassen.

In einer weiteren Ausführungsform können weitere Kameras vorgesehen sein, die weitere Bereiche der Umgebung des Fahrzeugs 2 erfassen.

In Fig. 2 nicht dargestellt sind die jeweiligen Anzeigeeinrichtungen 7-0 - 7-3. Diese können in dem Fahrzeug 2 an beliebigen Stellen angeordnet werden. Insbesondere kann lediglich eine Anzeigeeinrichtung 7-0 vorgesehen werden oder es kann eine Vielzahl von Anzeigeeinrichtungen 7-0 - 7-3 vorgesehen werden.

Die Anzeigeeinrichtungen 7-0 - 7-3 können dabei z.B. an denjenigen Stellen in dem Fahrzeug 2 angeordnet werden, an welchen üblicherweise die Seiten- bzw. Rückspiegel angeordnet sind. Die Anzeigereinrichtungen 7-0 - 7-3 können aber auch an anderen Positionen in dem Fahrzeug 2 angeordnet werden. Beispielsweise kann eine der Anzeigeeinrichtungen 7-0 - 7-3 in der Mittelkonsole des Fahrzeugs 2 angeordnet werden. Insbesondere kann eine der Anzeigeeinrichtungen 7-0 - 7-3 eine Anzeige eines Infotainment-Systems des Fahrzeugs 2 sein.

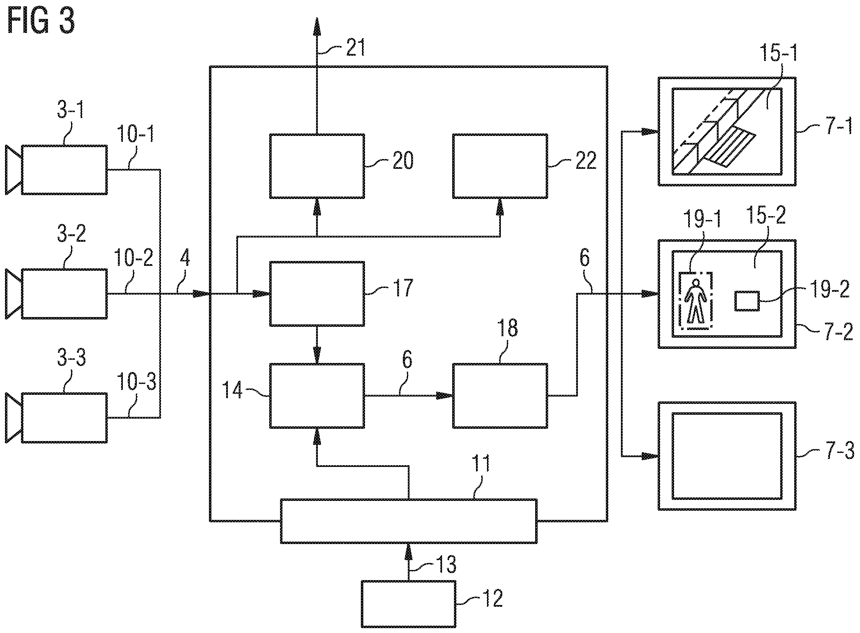

Fig. 3 zeigt ein Blockschaltbild einer weiteren Ausführungsform einer erfindungsgemäßen Spiegelersatzvorrichtung 1.

Die Spiegelersatzvorrichtung 1 der Fig. 3 basiert auf der Spiegelersatzvorrichtung 1 der Fig. 1. Im Unterschied zur Fig. 1 weist die Spiegelersatzvorrichtung 1 der Fig. 3 aber drei Kameras 3-1 - 3-3 auf, welche jeweils ein Kamerabildsignal 10-1 - 10-3 ausgeben, welches zusammengefasst wird und als Bildsignal 4 der Bildverarbeitungseinrichtung 5 zugeführt wird. Ferner sind drei Anzeigeeinrichtungen 7-1 - 7-3 mit der Bildverarbeitungseinrichtung 5 gekoppelt, von denen die erste Anzeigeeinrichtung 7-1 einen Bildausschnitt 15-1 zeigt, der den Bordstein neben dem Fahrzeug 2 zeigt, und die zweite Anzeigeeinrichtung 7-2 einen Bildausschnitt 15-2 zeigt, der den Bereich hinter dem Fahrzeug 2, in welchem sich zwei Objekte 19-1 und 19-2 befinden, zeigt. Dabei ist das erste Objekt 19-1 durch eine gestrichelte Umrandung markiert.

In Fig. 3 ist zu erkennen, dass in weiteren Ausführungsformen jeder Anzeigeeinrichtung 7-1 - 7-3 ein eigenes verarbeitetes Bildsignal 6 zugeführt werden kann, welches diese dann darstellt.

Ferner unterscheidet sich die Bildverarbeitungseinrichtung 5 von der Bildverarbeitungseinrichtung 5 der Fig. 1 dahingehend, dass die Bildverarbeitungseinrichtung 5 eine Kommunikationsschnittstelle 11 aufweist, über welche die Bildverarbeitungseinrichtung 5 mit einem Fahrzeugsystem 12 gekoppelt werden kann, von welchem die Bildverarbeitungseinrichtung 5 Daten 13 erhält. Diese Daten 13 können z.B. die Fahrtrichtung des Fahrzeugs 2 und die Fahrzeuggeschwindigkeit aufweisen. Alternativ kann die Bildverarbeitungseinrichtung 5 diese Daten 13 auch aus dem Bildsignal 4 berechnen.

Die Kommunikationsschnittstelle 11 liefert diese Daten 13 an eine Auswahleinrichtung 14, welche unter anderem basierend auf diesen Daten 13 einen Bildausschnitt 15-1, 15-2 aus dem Bildsignal 4 auswählt. Dabei ist zu beachten, dass die ausgewählten Bildausschnitte 15-1, 15-2 nicht den einzelnen Kamerabildsignalen 10-1 - 10-3 entsprechen müssen, sondern beliebige aus dem Bildsignal 4 ausgewählte Bereiche sein können. Insbesondere ist die Auswahleinrichtung 14 in einer Ausführungsform ausgebildet mehrere Bildausschnitte 15-1, 15-2 gleichzeitig auszuwählen.

Bei einer Vorwärtsfahrt des Fahrzeugs 2 kann die Auswahleinrichtung 14 z.B. diejenigen Bildausschnitte 15-1, 15-2 aus dem Bildsignal 4 auswählen, die üblicherweise durch die Rückspiegel oder die Seitenspiegel des Fahrzeug 2 gezeigt werden.

Dagegen kann die Auswahleinrichtung 14 bei einer Rückwärtsfahrt des Fahrzeugs 2 z.B. einen Bildausschnitt 15-1, 15-2 auswählen, der den Boden bzw. den Bordstein in der Umgebung des Fahrzeugs 2 zeigt. In einer Ausführungsform kann die Auswahleinrichtung 14 den Bordstein bzw. den Bereich am Boden um das Fahrzeug 2 markieren, z.B. durch einfärben oder umranden. Dadurch kann dem Fahrer besser angezeigt werden, wie nahe er dem Bordstein kommt und so vermieden werden, dass die Felgen des Fahrzeugs 2 z.B. beim Einparken verkratzt werden.

Die Auswahlvorrichtung 14 kann bei einer Rückwärtsfahrt z.B. in einer in der Mittelkonsole des Fahrzeugs 2 angebrachten Anzeigeeinrichtung 7-1 - 7-3 den Bordstein neben dem Fahrzeug 2 zeigen und in einer Anzeigeeinrichtung 7-1 - 7-3, die an der Position des Rückspiegels in dem Fahrzeugs 2 angeordnet ist, die rückwärtige Umgebung 9 des Fahrzeugs 2 zeigen. Prinzipiell kann die Auswahleinrichtung 14 beliebige Bildausschnitte 15-1, 15-2 gleichzeitig auswählen und auf den unterschiedlichen Anzeigeeinrichtungen 7-1 - 7-3 darstellen.

In einer weiteren Ausführungsform ist die Auswahleinrichtung 14 ausgebildet, eine Neigung des Fahrzeugs 2 auszugleichen. Die Auswahleinrichtung 14 kann z.B. bei einer Beladung des Fahrzeugs 2 bzw. wenn das Fahrzeug 2 eine Steigung hinauf oder ein Gefälle hinabfährt einen Bildausschnitt 15-1 - 15-2 auswählen, der die Straße hinter dem Fahrzeug zeigt. Im Gegensatz zu üblichen Spiegeln, die in solch einem Fall lediglich die Straße direkt hinter dem Fahrzeug 2 oder den Himmel zeigen, kann der Fahrer so immer die Straße hinter dem Fahrzeug 2 beobachten. In einer weiteren Ausführungsform kann die Auswahleinrichtung 14 den Bildausschnitt auch bei einer Kurvenfahrt des Fahrzeugs 2 so auswählen, dass die Straße hinter dem Fahrzeug 2 zu sehen ist.

In noch einer Ausführungsform kann die Auswahleinrichtung 14 einen Bildausschnitt 15-1, 15-2 auswählen, der dem toten Winkel des Fahrzeugs 2 entspricht. Insbesondere kann die Auswahleinrichtung 14 diesen Bildausschnitt, der den toten Winkel zeigt, mit weiteren Bildausschnitten 15-1, 15-2 kombinieren, indem der tote Winkel z.B. als verzerrte Darstellung an den weiteren Bildausschnitt 15-1, 15-2 angehängt wird.

In einer Ausführungsform kann die Auswahleinrichtung einen Bildausschnitt 15-1, 15-2 durch Zoomen bzw. Vergrößern auswählen. Dabei kann der dargestellte Bildausschnitt 15-1, 15-2 z.B. nach Bedarf verändert werden. Beispielsweise kann das Bild z.B. im Stand oder bei langsamer Fahrt manuell oder automatisch auf einen speziellen Sichtbereich gezoomt werden, um z.B. relevante Objekte 19-1, 19-2 besser erkennen zu können. Alternativ kann der Fahrer den Sichtbereich nach hinten manuell einstellen, z.B. erweitern oder einschränken.

In einer weiteren Ausführungsform kann die Auswahl des jeweiligen Bildbereichs automatisch erfolgen. In einer weiteren Ausführungsform kann auch eine Eingabeeinrichtung vorgesehen sein, mit welcher der Fahrer oder ein andere Insasse des Fahrzeugs 2 einen anzuzeigenden Bildausschnitt 15-1, 15-2 auswählen kann.

Die Bildverarbeitungseinrichtung 14 der Fig. 3 weist ferner eine Bildbearbeitungseinrichtung 17 auf, die der Auswahleinrichtung 14 vorgeschaltet ist. Die Bildbearbeitungseinrichtung 17 kann in einer Ausführungsform die Helligkeit mindestens eines Ausschnitts des Bildsignals 4 verändern. Z.B. kann die Bildbearbeitungseinrichtung 17 das Bild normalisieren, d.h. sehr helle Bereiche abdunkeln und sehr dunkle Bereiche aufhellen. Die Bildverarbeitungseinrichtung 14 kann z.B. auch lediglich sehr helle Bereiche in dem Bildsignal 4 abdunkeln oder lediglich sehr dunkle Bereiche aufhellen. Beispielsweise können Scheinwerfer anderer Fahrzeuge oder die Sonne individuell ausgeblendet oder gedimmt werden.

In einer weiteren Ausführungsform kann die Bildbearbeitungseinrichtung 17 den Kontrast des Bildsignals 4 verändern, insbesondere erhöhen, so dass für den Fahrer Objekte 19-1, 19-2 oder Umweltverhältnisse besser sichtbar werden, so dass der Fahrer diese besser erkennen kann.

In einer weiteren Ausführungsform kann die Bildbearbeitungseinrichtung 17 die Farbgebung mindestens eines Ausschnitts des Bildsignals 4 verändern.

In einer weiteren Ausführungsform kann die Bildbearbeitungseinrichtung 17 den Inhalt des Bildsignals 4 stabilisieren. Dadurch kann ein Zittern bzw. Wackeln des durch die Anzeigeeinrichtungen 7-1 - 7-3 dargestellten Bildes vermieden werden.

Der Auswahleinrichtung 14 nachgeschaltet ist eine Objekterkennungseinrichtung 18, die in dem verarbeiteten Bildsignal 6 Objekte 19-1, 19-2 erkennen und markieren kann. Das Markieren der Objekte 19-1, 19-2 kann dabei durch ein farbiges Hervorheben, durch ein Umranden, durch Zoomen auf das Objekt oder Darstellen in einem Overlay, einer Kombination der genannten Möglichkeiten oder dergleichen ausgeführt werden.

Die Bildverarbeitungseinrichtung 5 weist schließlich eine Recheneinrichtung 20 auf, die basierend auf dem Bildsignal 4 ein Warnsignal 21 erzeugen kann, wenn dies notwendig ist. Beispielsweise kann die Recheneinrichtung 20 einen Spurwechselassistent aufweisen, der bei einem Verlassen der Spur durch das Fahrzeug 2 ein Warnsignal ausgibt, wenn sich von hinten ein weiteres Fahrzeug nähert. Die Recheneinrichtung 20 kann auch einen sog. Felgenschutz implementieren. Dazu wird ein Warnsignal 21 ausgegeben, wenn der Fahrer sich mit dem Fahrzeug 2 dem Bordstein so nähert, dass eine Felge des Fahrzeugs 2 verkratzen könnte. Die Recheneinrichtung 20 kann z.B. auch ein Warnsignal 21 erzeugen, wenn sich ein Objekt 19-1, 19-2 in dem toten Winkel des Fahrzeugs 2 befindet.

Schließlich weist die Bildverarbeitungseinrichtung 5 eine Speichereinrichtung 22 auf, die das Bildsignal 4 speichern kann. Die Speichereinrichtung 22 kann dabei als beliebiger Speicher, z.B. als Flash-Speicher, Festplattenspeicher oder dergleichen ausgebildet sein.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise können bei der Ausführungsform der Fig. 3 einzelne Komponenten entfernt werden oder die Position bzw. Anordnung der einzelnen Komponenten verändert werden.

### Bezugszeichen

- 1: Spiegelersatzvorrichtung
- 2: Fahrzeug
- 3-0 - 3-3: Kamera
- 4: Bildsignal
- 5: Bildverarbeitungseinrichtung
- 6: verarbeitetes Bildsignal
- 7-0 - 7-3: Anzeigeeinrichtung
- 8-1 - 8-2: seitlicher Umgebungsbereich
- 9: rückwärtiger Umgebungsbereich
- 10-1 - 10-3: Kamerabildsignale
- 11: Kommunikationsschnittstelle
- 12: Fahrzeugsystem
- 13: Daten
- 14: Auswahleinrichtung
- 15-1 - 15-2: Bildausschnitt

- 17: Bildbearbeitungseinrichtung
- 18: Objekterkennungseinrichtung
- 19-1 - 19-2: Objekte
- 20: Recheneinrichtung
- 21: Warnsignal
- 22: Speichereinrichtung

## Patentansprüche

1. Spiegelersatzvorrichtung (1) für ein Fahrzeug (2),
mit mindestens einer Kamera (3-0 - 3-3), welche dazu ausgebildet ist, zumindest einen Teil einer Umgebung des Fahrzeugs (2) zu erfassen und ein entsprechendes Bildsignal (4) bereitzustellen;
mit einer Bildverarbeitungseinrichtung (5), welche mit der Kamera (3-0 - 3-3) gekoppelt ist und dazu ausgebildet ist, das Bildsignal der mindestens einen Kamera (3-0 - 3-3) zu verarbeiten und ein verarbeitetes Bildsignal (6) auszugeben; und
mit mindestens einer Anzeigeeinrichtung (7-0 - 7-3), welche dazu ausgebildet ist, das verarbeitete Bildsignal (6) darzustellen;
wobei die Bildverarbeitungseinrichtung (5) eine Auswahleinrichtung (14) aufweist, welche dazu ausgebildet ist, aus dem Bildsignal (4) einen Bildausschnitt (15-1 - 15-2) auszuwählen und den ausgewählten Bildausschnitt (15-1 - 15-2) als das verarbeitete Bildsignal (6) auszugeben;
wobei die Auswahleinrichtung (14) dazu ausgebildet ist, bei einer Vorwärtsfahrt des Fahrzeugs (2) einen Bildausschnitt (15-1 - 15-2) auszuwählen, welcher in etwa dem theoretisch durch einen Rückspiegel und/oder Seitenspiegel in dem Fahrzeug (2) dargestellten Bildausschnitt (15-1 - 15-2) entspricht;
wobei die Auswahleinrichtung (14) dazu ausgebildet ist, bei einer Rückwärtsfahrt des Fahrzeugs (2) mit einer Geschwindigkeit, die unter einem ersten Geschwindigkeitsschwellwert liegt, einen Bildausschnitt (15-1 - 15-2) auszuwählen und/oder zu markieren, der den Boden und/oder den Bordstein in der Umgebung des Fahrzeugs (2) zeigt.

2. Spiegelersatzvorrichtung nach Anspruch 1,
wobei die mindestens eine Kamera (3-0 - 3-3) ausgebildet ist, zumindest den seitlichen und/oder rückwärtigen Umgebungsbereich (8-1, 8-2, 9) des Fahrzeugs (2) zu erfassen.

3. Spiegelersatzvorrichtung nach einem der vorherigen Ansprüche,
mit einer Vielzahl von Kameras (3-0 - 3-3), welche derart ausgebildet sind, dass von den jeweiligen Kameras (3-0 - 3-3) erfasste Kamerabildsignale (10-1 - 10-3) sich ergänzen und das Bildsignal (4) bilden.

4. Spiegelersatzvorrichtung nach einem der vorherigen Ansprüche,
wobei die Bildverarbeitungseinrichtung (5) eine Kommunikationsschnittstelle (11) aufweist, welche dazu ausgebildet ist, von einem Fahrzeugsystem (12) des Fahrzeugs (2) zumindest Daten (13) über die Fahrtrichtung des Fahrzeugs (2) und die Fahrzeuggeschwindigkeit zu erhalten.

5. Spiegelersatzvorrichtung nach einem der vorherigen Ansprüche,
wobei die mindestens eine Kamera (3-0 - 3-3) ausgebildet ist, den toten Winkel (16) des Fahrzeugs (2) zu erfassen; und
wobei die Auswahleinrichtung (14) dazu ausgebildet ist, den Bildausschnitt (15-1 - 15-2) auszuwählen, welcher dem toten Winkel (16) des Fahrzeugs (2) entspricht.

6. Spiegelersatzvorrichtung nach einem der vorherigen Ansprüche,
wobei die Auswahleinrichtung (14) dazu ausgebildet ist, bei einer Beladung des Fahrzeugs (2) und/oder einer Kurvenfahrt des Fahrzeugs (2) und/oder einer Fahrt einer Steigung oder eines Gefälles durch das Fahrzeug (2) einen Bildausschnitt (15-1 - 15-2) auszuwählen, der die Straße hinter dem Fahrzeug (2) zeigt.

7. Spiegelersatzvorrichtung nach einem der vorherigen Ansprüche,
wobei die Auswahleinrichtung (14) ausgebildet ist, mehr als einen Bildausschnitt (15-1 - 15-2) auszuwählen und die ausgewählten Bildausschnitte (15-1 - 15-2) in dem verarbeiteten Bildsignal (6) zu kombinieren; und/oder
einen Bildausschnitt (15-1 - 15-2) zu vergrößern.

8. Spiegelersatzvorrichtung nach einem der vorherigen Ansprüche,
wobei die Bildverarbeitungseinrichtung (5) eine Bildbearbeitungseinrichtung (17) aufweist, welche ausgebildet ist:
die Helligkeit mindestens eines Ausschnitts des Bildsignals (4) zu verändern, insbesondere zu normalisieren; und/oder
den Kontrast mindestens eines Ausschnitts des Bildsignals (4) zu verändern, insbesondere zu erhöhen; und/oder
die Farbgebung mindestens eines Ausschnitts des Bildsignals (4) zu verändern; und/oder
den Inhalt des Bildsignals (4) zu stabilisieren.

9. Spiegelersatzvorrichtung nach einem der vorherigen Ansprüche,
wobei die Bildverarbeitungseinrichtung (5) eine Objekterkennungseinrichtung (18) aufweist, welche ausgebildet ist, Objekte (19-1 - 19-2) in dem Bildsignal (4) und/oder dem verarbeiteten Bildsignal (6) zu erkennen und mindestens ein erkanntes Objekt (19-1 - 19-2) in dem Bildsignal (4) zu markieren;
wobei die Objekterkennungseinrichtung (18) insbesondere ausgebildet ist ein Objekt (19-1 - 19-2) durch Umranden und/oder Einfärben mit einer vorgegebenen Farbe und/oder Zoomen auf das Objekt (19-1 - 19-2) zu markieren.

10. Spiegelersatzvorrichtung nach einem der vorherigen Ansprüche,
wobei die Bildverarbeitungseinrichtung (5) eine Recheneinrichtung (20) aufweist, welche ausgebildet ist, ein Warnsignal (21) basierend auf dem Bildsignal (4) zu erzeugen, wenn ein Verlassen der Fahrspur durch das Fahrzeug (2) bevorsteht und/oder wenn sich ein Objekt in einem toten Winkel (16) des Fahrzeugs (2) befindet und/oder von hinten dem Fahrzeug (2) nähert.

11. Spiegelersatzvorrichtung nach einem der vorherigen Ansprüche,
wobei die Bildverarbeitungseinrichtung (5) eine Speichereinrichtung (22) aufweist, welche ausgebildet ist, das Bildsignal (4) zu speichern.

12. Fahrzeug (2)
mit einer Spiegelersatzvorrichtung (1) nach einem der Ansprüche 1 bis 11.

## Claims

1. A mirror substitute device (1) for a vehicle (2), comprising
at least one camera (3-0 - 3-3) configured to monitor at least a part of the surroundings of the vehicle (2) and to provide a corresponding image signal (4);
an image processing device (5) coupled to the camera (3-0 - 3-3) and configured to process the image signal of the at least one camera (3-0 - 3-3) and to output a processed image signal (6); and
at least one display device (7-0 - 7-3) configured to display the processed image signal (6);
wherein the image processing device (5) has a selection device (14) configured to select an image detail (15-1 - 15-2) from the image signal (4) and to output the selected image detail (15-1 - 15-2) as the processed image signal (6);
wherein the selection device (14) is configured to select, when the vehicle (2) is moving forward, an image detail (15-1 - 15-2) that approximately corresponds to the image detail (15-1 - 15-2) theoretically shown by a rear view mirror and/or lateral mirror in the vehicle (2);
wherein the selection device (14) is configured to select and/or mark, when the vehicle (2) is moving backward at a speed below a first speed threshold value, an image detail (15-1 - 15-2) that shows the ground and/or the curbstone in the surroundings of the vehicle (2).

2. The mirror substitute device according to Claim 1,
wherein the at least one camera (3-0 - 3-3) is configured to monitor at least the lateral and/or rear regions of the surroundings (8-1, 8-2, 9) of the vehicle (2).

3. The mirror substitute device according to any one of the previous claims,
comprising a plurality of cameras (3-0 - 3-3) configured such that camera image signals (10-1 - 10-3) monitored by the respective cameras (3-0 - 3-3) complement each other and are combined to form the image signal (4).

4. The mirror substitute device according to any one of the previous claims,
wherein the image processing device (5) has a communication interface (11) configured to obtain from a vehicle system (12) of the vehicle (2) at least data (13) about the direction of motion of the vehicle (2) and the speed of the vehicle.

5. The mirror substitute device according to any one of the previous claims,
wherein the at least one camera (3-0 - 3-3) is configured to monitor the blind spot (16) of the vehicle (2); and
wherein the selection device (14) is configured to select the image detail (15-1 - 15-2) which corresponds to the blind spot (16) of the vehicle (2).

6. The mirror substitute device according to any one of the previous claims,
wherein the selection device (14) is configured to select, when the vehicle (2) is loaded and/or is cornering and/or is moving uphill or downhill, an image detail (15-1 - 15-2) that shows the road behind the vehicle (2).

7. The mirror substitute device according to any one of the previous claims,
wherein the selection device (14) is configured to select more than one image detail (15-1 - 15-2) and to combine the selected image details (15-1 - 15-2) in the processed image signal (6); and/or
said selection device is configured to enlarge an image detail (15-1 - 15-2).

8. The mirror substitute device according to any one of the previous claims,
wherein the image processing device (5) has an image editing device (17) configured to:
change, particularly to normalize, the brightness of at least one detail of the image signal (4); and/or
change, particularly to increase, the contrast of at least one detail of the image signal (4); and/or
change the coloration of at least one detail of the image signal (4); and/or
stabilize the contents of the image signal (4).

9. The mirror substitute device according to any one of the previous claims,
wherein the image processing device (5) has an object detection device (18) configured to detect objects (19-1 - 19-2) in the image signal (4) and/or in the processed image signal (6) and to mark at least one detected object (19-1 - 19-2) in the image signal (4);
wherein the object detection device (18) is configured in particular to mark an object (19-1 - 19-2) by boxing the object and/or coloring the object with a predetermined color and/or zooming in on the object (19-1 - 19-2).

10. The mirror substitute device according to any one of the previous claims,
wherein the image processing device (5) has a calculating device (20) configured to generate a warning signal (21) based on the image signal (4) when the vehicle (2) is on the point of deviating from the traffic lane and/or when an object is in a blind spot (16) of the vehicle (2) and/or when an object is approaching the vehicle (2) from behind.

11. The mirror substitute device according to any one of the previous claims,
wherein the image processing device (5) has a storage device (22) configured to store the image signal (4).

12. A vehicle (2)
comprising a mirror substitute device (1) according to any one of Claims 1 to 11.

## Revendications

1. Dispositif de remplacement de rétroviseur (1) pour un véhicule (2),
composé d'au moins une caméra (3-0 - 3-3), conçue pour capturer au moins une partie de l'environnement du véhicule (2) et fournir un signal d'image (4) correspondant ;
composé d'un dispositif de traitement d'image (5) couplé à la caméra (3-0 - 3-3) et conçu pour traiter le signal d'image d'au moins une caméra (3-0 - 3-3) et délivrer en sortie un signal d'image traité (6) ; et
composé d'au moins un dispositif d'affichage (7-0 - 7-3), conçu pour afficher le signal d'image traité (6) ;
dans lequel le dispositif de traitement d'image (5) présente un moyen de sélection (14), conçu pour sélectionner une portion d'image (15-1 - 15-2) à partir du signal d'image (4) et délivrer en sortie la portion d'image (15-1 - 15-2) sélectionnée sous forme du signal d'image traité (6) ;
dans lequel le moyen de sélection (14), lors d'une marche avant du véhicule (2), est conçu pour sélectionner une portion d'image (15-1 - 15-2), laquelle correspond globalement à la portion d'image (15-1 - 15-2) théoriquement fournie par un rétroviseur central et/ou un rétroviseur latéral dans le véhicule (2) ;
dans lequel le moyen de sélection (14), lors d'une marche arrière du véhicule (2) à une vitesse inférieure à un premier seuil de vitesse, est conçu pour sélectionner et/ou marquer une portion d'image (15-1 - 15-2) qui montre le sol et/ou la bordure de trottoir dans l'environnement du véhicule (2).

2. Dispositif de remplacement de rétroviseur selon la revendication 1,
dans lequel au moins une caméra (3-0 - 3-3) est conçue pour capturer au moins la zone environnante latérale et/ou arrière (8-1, 8-2, 9) du véhicule (2).

3. Dispositif de remplacement de rétroviseur selon l'une quelconque des revendications précédentes,
composé de plusieurs caméras (3-0 - 3-3) conçues de telle sorte que les signaux d'image capturés (10-1 - 10-3) par chacune des caméras (3-0 - 3-3) se complètent pour former le signal d'image (4).

4. Dispositif de remplacement de rétroviseur selon l'une quelconque des revendications précédentes,
dans lequel le dispositif de traitement d'image (5) présente une interface de communication (11), conçue pour au moins recevoir des données (13) issues d'un système de véhicule (12) du véhicule (2) concernant la direction de déplacement et la vitesse du véhicule (2).

5. Dispositif de remplacement de rétroviseur selon l'une quelconque des revendications précédentes,
dans lequel au moins une caméra (3-0 - 3-3) est conçue pour capturer l'angle mort (16) du véhicule (2) ; et
dans lequel le moyen de sélection (14) est conçu pour sélectionner la portion d'image (15-1 - 15-2) qui correspond à l'angle mort (16) du véhicule (2).

6. Dispositif de remplacement de rétroviseur selon l'une quelconque des revendications précédentes,
dans lequel le moyen de sélection (14), lors d'un chargement du véhicule (2) et/ou lors d'une prise de virage du véhicule (2) et/ou lors d'une conduite sur une pente ascendante ou descendante dans le véhicule (2), est conçu pour sélectionner une portion d'image (15-1 - 15-2) qui montre la rue derrière le véhicule (2).

7. Dispositif de remplacement de rétroviseur selon l'une quelconque des revendications précédentes,
dans lequel le moyen de sélection (14) est conçu pour sélectionner plus d'une portion d'image (15-1 - 15-2) et pour combiner les portions d'image (15-1 - 15-2) sélectionnées en un seul signal d'image traité (6) ; et/ou
pour agrandir une portion d'image (15-1 - 15-2).

8. Dispositif de remplacement de rétroviseur selon l'une quelconque des revendications précédentes,
dans lequel le dispositif de traitement d'image (5) présente un dispositif de retouche d'image (17), lequel est conçu pour :
modifier, et notamment ajuster, la luminosité d'au moins une portion d'image du signal d'image (4) ; et/ou
modifier, et notamment augmenter, le contraste d'au moins une portion d'image du signal d'image (4) ; et/ou
modifier la teinte d'au moins une portion d'image du signal d'image (4) ; et/ou
stabiliser le contenu du signal d'image (4).

9. Dispositif de remplacement de rétroviseur selon l'une quelconque des revendications précédentes,
dans lequel le dispositif de traitement d'image (5) présente un dispositif de reconnaissance d'objets (18), conçu pour reconnaître des objets (19-1 - 19-2) dans le signal d'image (4) et/ou dans le signal d'image traité (6) et pour marquer au moins un objet reconnu (19-1 - 19-2) dans le signal d'image (4) ;
dans lequel le dispositif de reconnaissance d'objets (18) est notamment conçu pour marquer un objet (19-1 - 19-2) en l'entourant, et/ou en le mettant en couleur avec une couleur prédéfinie et/ou en zoomant dessus.

10. Dispositif de remplacement de rétroviseur selon l'une quelconque des revendications précédentes,
dans lequel le dispositif de traitement d'image (5) présente un dispositif de calcul (20), conçu pour générer un signal d'avertissement (21) en fonction du signal d'image (4), lorsque le véhicule (2) s'apprête à quitter une voie de circulation et/ou lorsqu'un objet se trouve dans un angle mort (16) du véhicule (2) et/ou lorsqu'un objet s'approche du véhicule (2) par derrière.

11. Dispositif de remplacement de rétroviseur selon l'une quelconque des revendications précédentes,
dans lequel le dispositif de traitement d'image (5) présente un moyen de stockage (22), conçu pour stocker le signal d'image (4).

12. Véhicule (2)
composé d'un dispositif de remplacement de rétroviseur (1) selon l'une des revendications 1 à 11.
